# EUROPÄISCHE PATENTANMELDUNG

(11) **EP 1 914 329 A1**
(43) Veröffentlichungstag der Anmeldung: **23.04.2008**
(21) Anmeldenummer: 06021673.6
(22) Anmeldetag: 16.10.2006
(51) Int. Cl.: C23C 24/04, C09D 1/02

(54) **Vorrichtung und Verfahren zur Erhöhung der Betriebsdauer von Feuerungsanlagen**

(71) Anmelder: SIEMENS AKTIENGESELLSCHAFT, 80333 München (DE)
(72) Erfinder: Hannemann, Frank, 91054 Buckenhof (DE); Köstlin, Berthold, 47057 Duisburg (DE); Nies, Rainer, 91054 Erlangen (DE)

(57) **Zusammenfassung**

Die Erfindung betrifft eine Vorrichtung zur Erhöhung der Betriebsdauer von Feuerungsanlagen, umfassend zumindest ein gasführendes Bauelement (4), wobei das geführte Gas Verschmutzungskomponenten (3) aufweist dadurch gekennzeichnet, dass das zumindest eine gasführende Bauelement (4) eine Schicht (5) aufweist, wobei die Schicht (5) bei Beaufschlagung mit dem Gas bei Ablagerung einer Verschmutzungskomponente (3) auf der Schicht (5) zumindest zusammen teilweise mit der Verschmutzungskomponente (3) durch den Gasstrom selbst ablösbar ist.

## Beschreibung

Die Erfindung betrifft eine Vorrichtung zur Erhöhung der Betriebsdauer von Feuerungsanlagen umfassend zumindest einem gasführenden Bauelement. Dabei weist das Gas Verschmutzungskomponenten auf. Weiterhin betrifft die Erfindung ein Verfahren zur Erhöhung der Betriebsdauer von Feuerungsanlagen.

Im vergangenen Jahrzehnt wurde weltweit eine Vielzahl von Kraftwerken errichtet, denen ein kombinierter Gas- und Dampfturbinenprozess zugrunde liegt und mit denen der Schadstoffausstoß deutlich herabgesetzt werden kann. Diese Kraftwerke werden im Fachjargon als GUD-Kraftwerke bezeichnet.

Bei einer Unterform der GUD-Kraftwerke, den so genannten IGCC-Kraftwerken (bei "IGCC" handelt es sich um eine Abkürzung für "Integrated Gasification Combined Cycle"), weist das GUD-Kraftwerk zusätzlich eine integrierte Brennstoffvergasung auf, mittels derer ein flüssiger -etwa Öl - oder fester Brennstoff - etwa Stein,- Braunkohle oder Biomasse - in einem Vergaser in ein Synthesegas umgewandelt wird, das anschließend in einer Gasturbine verbrannt wird. Vor der Verbrennung erfolgt in der Regel eine Reinigung des Synthesegases. Insgesamt betrachtet werden auf diese Weise Schadstoffe schon vor der Verbrennung abgetrennt oder entstehen erst gar nicht.

Für die Vergasung der Brennstoffe zu Synthesegas ist Sauerstoff erforderlich. Zur Erzeugung des Sauerstoffs weisen IGCC-Kraftwerke Luftzerlegungsanlagen auf, in denen aus der Umgebungsluft durch fraktionierte Destillation neben dem benötigten Sauerstoff vor allem Stickstoff erzeugt wird. Das Synthesegas muss vor der weiteren Behandlung abgekühlt werden. Hierbei entsteht Dampf, der u.a. in der Dampfturbine des IGCC-Kraftwerks zur Stromerzeugung beiträgt. Nach der Abkühlung des Gases halten Filter zunächst Aschepartikel zurück, anschließend kann bei Bedarf auch Kohlendioxid entzogen werden. Andere Schadstoffe, wie Schwefelverbindungen oder Schwermetalle werden ebenfalls durch chemische und physikalische Verfahren gebunden. Dadurch werden die nötige Brennstoff-Reinheit für den Betrieb der Gasturbinen und geringe Emissionen des IGCC-Kraftwerks realisiert.

Das Synthesegas wird vor der Brennkammer der Gasturbine ggf. mit Stickstoff aus der Luftzerlegungsanlage und/oder mit Wasserdampf vermischt, um das Brenngasgemisch entsprechend den Gasturbinenanforderungen zu konditionieren. Das dann aus der Verbrennung mit Luft entstehende Arbeitsgas wird in den Turbinenstufen der Gasturbine expandiert.

Nach Entspannung des Arbeitsgases in der Gasturbine und anschließender Abwärmenutzung in einem Dampferzeuger wird das Abgas an die Atmosphäre abgegeben.

Die Dampfströme aus der Rohgas- und Abgaskühlung werden kombiniert und gemeinsam der Dampfturbine zugeleitet. Nach der Entspannung in der Dampfturbine wird der Dampf über einen Kondensator kondensiert und das Kondensat über den Speisewasserbehälter zurück in den Wasser- bzw. den Dampfkreislauf geführt.

Eine derartige IGCC-Anlage ist beispielsweise aus der WO 03/008768 bekannt. Diese Anlage weist eine Vergasungseinrichtung auf, in der partikelförmige Kohle zusammen mit Sauerstoff und Dampf zu einem Synthesegas verbrannt werden (Partialoxidation). Das Synthesegas wird - nach mehreren Aufbereitungsschritten - als gasförmiger Brennstoff einer Gasturbinebrennkammer zugeführt.

Problematisch hierbei ist jedoch, dass die Verschmutzungskomponenten wie z.B. kleinere Aschepartikel sich als Ablagerungen an den gasführenden Leitungen sowie sich darin befindlichen Anordnungen, Z.B. Filter oder Ventile oder Ventilähnlichen Vorrichtungen festsetzen. Das Gas kann auch gasförmige (Metall-)Verbindungen enthalten, z.B. Eisen und Nickelcarbonyle, die durch Reaktion an Metallelementen ebenfalls zu einer Ablagerung an den Bauelementen führt. Dies führt zu Belagbildung in Form von Eisen oder Nickelcarbonylen an Brennerbauteilen, was eine zyklische Reinigung erforderlich machte und somit die Verfügbarkeit des IGCC Kraftwerks deutlich beeinträchtigte.
Diese Ablagerungen müssen dann vor der eigentlichen geplanten Wartung der Anlage entfernt und gesäubert oder aber ausgetauscht werden. Dazu muss die Anlage heruntergefahren werden, was zu enormen Kosten führt.

Aufgabe der Erfindung ist daher die Angabe einer Vorrichtung zur Erhöhung der Betriebsdauer von Feuerungsanlagen, insbesondere Synthesegas-Anlagen, wobei die Anlage gasführende Bauelemente umfasst und das Gas Verschmutzungskomponenten aufweist. Eine weitere Aufgabe ist die Angabe eines Verfahrens zur Erhöhung der Betriebsdauer von Feuerungsanlagen.

Die auf die Vorrichtung bezogene Aufgabe wird erfindungsgemäß gelöst durch die Angabe einer Vorrichtung zur Erhöhung der Betriebsdauer von Feuerungsanlagen, umfassend zumindest ein gasführendes Bauelement, wobei das geführte Gas Verschmutzungskomponenten aufweist, und wobei das zumindest eine gasführende Bauelement eine Schicht aufweist, wobei die Schicht bei Beaufschlagung mit dem Gas bei Ablagerung einer Verschmutzungskomponente auf der Schicht zumindest zusammen teilweise mit der Verschmutzungskomponente durch den Gasstrom selbst ablösbar ist.

Die Erfindung geht von der Tatsache aus, dass sich die Verschmutzungskomponenten auf einem Bauelement absetzten und sich auch durch das vorbeiströmende Gas nicht ablösen lassen. Die Erfindung hat daher erkannt, dass die Bauelemente geeignet beschichtet werden müssen. Weiterhin hat die Erfindung erkannt, dass eine ablösbare Beschichtung die Aufgabe löst. Lagert sich nämlich nun eine Verschmutzungskomponente auf dem so beschichtete Bauelemente ab, so wird durch den Gasstrom ein Teil der Beschichtung mit der Verschmutzungskomponente abgelöst. Somit bleibt das gasführende Bauelement eine wesentlich längere Zeit Ablagerungs- und Verschmutzungsfrei. Die Anlage muss somit nicht vorzeigt heruntergefahren werden, um die Ablagerungen zu beseitigen, so dass ein störungsfreier Betrieb aufrechterhalten werden kann. Die Betriebsdauer einer solchen Anlage wird dadurch signifikant erhöht.

Bevorzugt sind die Verschmutzungskomponenten Feststoffpartikel. Dies können vor allem die bei der IGCC-Anlage entstehenden Aschepartikel sein.

In bevorzugter Ausgestaltung ist die Verschmutzungskomponente eine durch eine gasförmige Verbindung im Gas entstehende chemische Reaktion mit dem gasführenden Bauelement, welche zu einer Ablagerung auf der Oberfläche des gasführenden Bauelements führt. Das Gas enthält nämlich ebenfalls gasförmige (Metall-)Verbindungen, z.B. Eisen und Nickelcarbonyle, die durch Reaktion an beispielsweise Metallelementen ebenfalls zu einer Ablagerung führt.

Bevorzugt weist die ablösbare Schicht eine kristallographische Struktur auf, die ein Ablösen bei einer Beaufschlagung mit dem Gas begünstigt.
Die Struktur ist insbesondere für eine Ablösung geeignet.

Bevorzugt weist die ablösbare Schicht Bornit auf. Bornitrid kann unter Temperatureinwirkung (bis 1200) keine Reaktion mit Kohlenmonoxid aufweist. Daher eignet es sich besonders gut zur Oberflächenbeschichtung. Es eignet sich besonders gut, da es hitzeresistent ist als auch Oxidation-Resistent bis 1000 °C. Weiterhin eignet es sich besonders gut, da es nichtbenetzbar mit geschmolzenen Metallen ist. Auch ist es relativ kostengünstig. Aufgrund der graphit-struktur können sich auf der Bornitrid ablagernde Verschmutzungskomponenten und andere Verunreinigungen mit einem Teil der Bornitridschicht durch die Gasströmung selbst ablösen.

In bevorzugter Ausgestaltung ist die ablösbare Schicht auf dem gasführenden Bauelement durch ein Sprühverfahren aufgebracht. Dies ist besonders vorteilhaft, da ein Aufsprühen der Schicht sich als besonders einfach herausgestellt hat. Weiterhin können so auch kleine Löcher in dem Bauelement weitgehend problemlos beschichtet werden. Ein weiterer Vorteil ergibt sich dadurch, dass durch das Aufsprühen eine weitgehend gleichmäßige Dicke der Schicht erzeugt werden kann.

Bevorzugt ist das zumindest eine gasführende Bauelement eine Lochblende. Die hier genannte Vorrichtung lässt sich besonders gut auf gasführende Lochblenden mit einer Anzahl von Löchern anwenden, da sich hier besonders viele Verschmutzungskomponenten festsetzen können und somit den Brennstofffluss signifikant stören.

Bevorzugt sind Bauteile zu behandeln, die als kritisch hinsichtlich der Resublimierung von gasförmig gebundenen Schadstoffen angesehen werden - wie z.B. gasführende Brennerkomponenten, an deren metallischen Oberflächen sich Eisen und oder Nickelcarbonyle als Feststoffe ablagern und ein zyklische Reinigung erfordern.

Bevorzugt ist die Feuerungsanlage als Synthesegas-Brenner ausgestaltete. Synthesegasanlage wie zum Beispiel Kohlegas-Anlagen zeichnen sich besonders durch viele Verschmutzungskomponenten insbesondere Aschepartikel oder Ablagerung durch chemische Reaktion aus. Daher eignet sich die Vorrichtung besonders in diesen Anlagen.

Die auf das Verfahren bezogen Aufgabe wird gelöst durch ein Verfahren zur Erhöhung der Betriebsdauer von Feuerungsanlagen, umfassend zumindest ein gasführendes Bauelement, wobei das geführte Gas Verschmutzungskomponenten aufweist, so dass das beschichtete Bauelement mit dem Gas beaufschlagt wird, Verschmutzungskomponenten sich auf der Schicht ablagern, und dass die Verschmutzungskomponenten zumindest zusammen teilweise mit der Schicht durch den Gasstrom abgelöst selbst werden.

Sämtliche Vorteile der auf die Vorrichtung bezogenen Aufgabe können auch auf das Verfahren angewendet werden.

Weitere Merkmale und Vorteile ergeben sich aus den weiteren Ansprüchen sowie der Beschreibung der Figuren.

Im Folgenden wird die Erfindung beispielhaft anhand einer Zeichnung näher erläutert.

Darin zeigt in vereinfachter und nicht maßstäblicher Darstellung:
- FIG 1: eine Lochblende ohne Verschmutzungskomponenten,
- FIG 2: eine Lochblende mit Verschmutzungskomponenten,
- FIG 3: Vorrichtung und Verfahren zur Erhöhung der Betriebsdauer von Feuerungsanlagen.

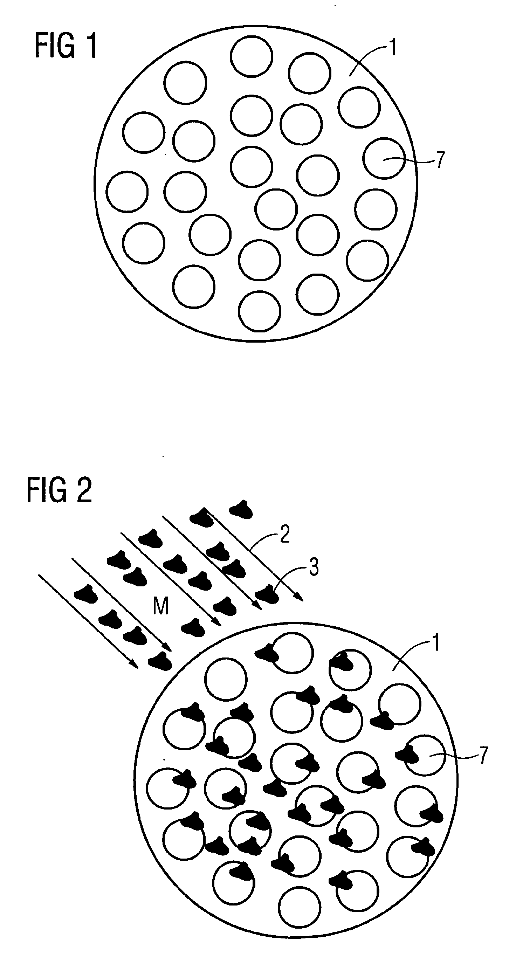

FIG 1 zeigt beispielhaft eine als gasführendes Element ausgestaltete Lochblende 1 wie sie in einem IGCC-Kraftwerk oder in anderen Kohlegaskraftwerken bzw. Synthesegaskraftwerken verwendet werden. Hier wird das Gaszufuhrsystem mit einer Lochblende 1 mit Löchern 7 ausgestaltet, um einen gleichmäßigen Brennstoffzufluss zu erhalten. Dabei zeigt FIG 1 eine ohne Ablagerung und Verschmutzung behaftete Lochblende 1.

FIG 2 zeigt den Massenstrom M des Brennstoffes mit Verschmutzungskomponenten 3 hier beispielsweise als Aschepartikel 3 dargestellt in Stromrichtung 2 des Brennstoffes. Die Aschepartikel setzen sich an der Lochblende 1 fest und verstopfen so die Löcher 7. Dies hat einen ungleichmäßigen Brennstoffgasfluss zu Folge. Somit ist ein reibungsloser Ablauf der Verbrennung nicht mehr möglich. Die Anlage muss daher stillgesetzt und die Lochblende 1 gereinigt oder ausgetauscht werden. Dies bedeutet enorme Kosten.

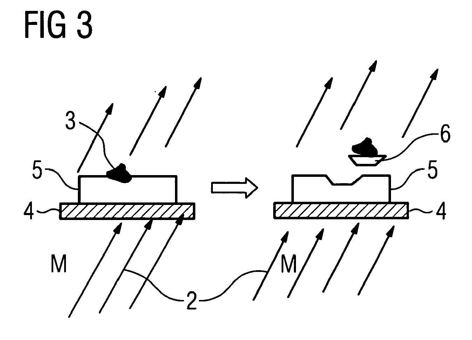

FIG 3 zeigt nun die erfindungsgemäße Vorrichtung und das Verfahren. Auf einem gasführenden Bauelement 4, hier auschnittsweise gezeigt, beispielsweise der Lochblende 1, gasführenden Rohren oder Ventilen wird eine ablösende Schicht 5 aufgesprüht. Dabei ist die ablösende Schicht 5 vorzugsweise eine hexagonale Bornitridschicht. Durch das Aufsprühen wird eine im Wesentlichen gleichmäßige Dicke der Schicht erzielt. Die Verschmutzungskomponente 3 im Massenstrom M setzt sich nun auf der Schicht fest. Die Ablösbarkeit der Schicht 5 bewirkt nun dass sich der abgelagerte Verschmutzungskomponente 3 mit dem Massenstrom (Gasstrom) in Stromrichtung 2 mit einem Teil der Schicht 6 selbst, das heißt also im Betrieb löst. Das gasführenden Bauelement 4 bleibt somit signifikant länger ablagerungs- und verschmutzungsfrei. Somit wird ein gleichmäßiger Brennstofffluss bzw. Massenstrom M gewährleistet. Ein vorzeitiges Stellsetzen der Anlage wird dadurch vermieden. Dabei können die gasführenden Bauelemente Rohre, Ventile, Lochblenden, Brennerbauteile oder auch der Brenner selbst sein.

## Patentansprüche

1. Vorrichtung zur Erhöhung der Betriebsdauer von Feuerungsanlagen, umfassend zumindest ein gasführendes Bauelement (4), wobei das geführte Gas Verschmutzungskomponenten (3) aufweist **dadurch gekennzeichnet, dass** das zumindest eine gasführende Bauelement (4) eine Schicht (5) aufweist, wobei die Schicht (5) bei Beaufschlagung mit dem Gas bei Ablagerung einer Verschmutzungskomponente (3) auf der Schicht (5) zumindest zusammen teilweise mit der Verschmutzungskomponente (3) durch den Gasstrom selbst ablösbar ist.

2. Vorrichtung nach Anspruch 1, **dadurch gekennzeichnet, dass** die Verschmutzungskomponenten Feststoffpartikel sind.

3. Vorrichtung nach einem der Ansprüche 1 bis 2, **dadurch gekennzeichnet, dass** die Verschmutzungskomponenten das Reaktionsprodukt einer durch eine gasförmige Verbindung im Gas entstehende chemische Reaktion mit dem gasführenden Bauelement (4) ist, welche zu einer Ablagerung auf der Oberfläche des gasführenden Bauelements (4) führt.

4. Vorrichtung nach einem der Ansprüche 1 bis 3, **dadurch gekennzeichnet, dass** die ablösbare Schicht (5) eine kristallographische Struktur aufweist, die ein Ablösen bei einer Beaufschlagung mit dem Gas begünstigt.

5. Vorrichtung nach einem der Ansprüche 1 bis 4, **dadurch gekennzeichnet, dass** die ablösbare Schicht (5) eine Dicke zwischen 10 µm und 100 µm, insbesondere zwischen 20 µm und 60 µm aufweist.

6. Vorrichtung nach einem der Ansprüche 1 bis 5, **dadurch gekennzeichnet, dass** die ablösbare Schicht (5) Bornit aufweist.

7. Vorrichtung nach einem der Ansprüche 1 bis 6, **dadurch gekennzeichnet, dass** die ablösbare Schicht (5) aus Bornit besteht.

8. Vorrichtung nach einem der Ansprüche 1 bis 7, **dadurch gekennzeichnet, dass** die ablösbare Schicht (5) auf dem gasführenden Bauelement (4) durch ein Sprühverfahren aufgebracht ist.

9. Vorrichtung nach einem der Ansprüche 1 bis 8, **dadurch gekennzeichnet, dass** das zumindest eine gasführende Bauelement (4) eine Lochblende (1) mit einer Anzahl von Löchern (7) ist.

10. Vorrichtung nach einem der Ansprüche 1 bis 8, **dadurch gekennzeichnet, dass** das zumindest eine gasführende Bauelement (4) kritisch hinsichtlich der Resublimierung von gasförmig gebundenen Schadstoffen ist.

11. Vorrichtung nach einem der Ansprüche 1 bis 8, **dadurch gekennzeichnet, dass** das zumindest eine gasführende Bauelement (4) eine Rohrleitung ist.

12. Vorrichtung nach einem der Ansprüche 1 bis 11, **dadurch gekennzeichnet, dass** das zumindest eine gasführende Bauelement (4) aus Metall oder einem metallischen Grundmaterial, insbesondere einer Nickelbasislegierung besteht.

13. Als Synthesegas-Brenner ausgestaltete Feuerungsanlage mit einer Vorrichtung nach einem der vorhergehenden Ansprüche.

14. Verfahren zur Erhöhung der Betriebsdauer von Feuerungsanlagen, umfassend zumindest ein gasführendes Bauelement (4), wobei das geführte Gas Verschmutzungskomponenten (3) aufweist, **dadurch gekennzeichnet, dass**
• das beschichtete Bauelement mit dem Gas beaufschlagt wird,
• Verschmutzungskomponenten (3) sich auf der Schicht (5) ablagern,
• und dass die Verschmutzungskomponenten (3) zumindest zusammen teilweise mit der Schicht (5) durch den Gasstrom abgelöst selbst werden.
